# EUROPÄISCHE PATENTSCHRIFT

(11) **EP 0 644 259 B1**
(45) Veröffentlichungstag und Bekanntmachung des Hinweises auf die Patenterteilung: **26.01.2000**
(21) Anmeldenummer: 94113505.5
(22) Anmeldetag: 30.08.1994
(51) Int. Cl.: C12C 13/02, B01D 1/28

(54) **Sudhausanlage mit mindestens zwei Würzepfannen**
Brewing unit with at least two boiling vessels
Unité de brassage comprenant au moins deux cuves d'ébullition

(30) Priorität: 17.09.1993 DE 9314102 U
(43) Veröffentlichungstag der Anmeldung: 22.03.1995
(73) Patentinhaber: ANTON STEINECKER ENTWICKLUNGS GmbH & Co., D-85318 Freising (DE)
(72) Erfinder: Klein,Martin, D-85405 Nandlstadt (DE)
(74) Vertreter: Grünecker, Kinkeldey, Stockmair & Schwanhäusser Anwaltssozietät

(56) Entgegenhaltungen:
- CH-A- 224 633
- DE-A- 3 023 032
- FR-A- 1 381 770
- FR-A- 2 442 886

## Beschreibung

Die Erfindung betrifft eine Sudhausanlage mit mindestens zwei Würzepfannen, die über Pfannendunstrohre an eine Brüdenverdichteranlage angeschlossen sind.

In größeren Sudhausanlagen ist es üblich, daß mit zwei oder noch mehr Würzepfannen Bier gebraut wird. Der Brauvorgang in den einzelnen Würzepfannen findet nacheinander statt, so daß man eine dichte Sudfolge und damit eine hohe Leistung erzielen kann.

Der beim Kochvorgang anfallende Brüden stellt eine Abwärmequelle dar, deren Energie man durch Einsatz von Brüdenverdichtungsanlagen nutzen kann. Dabei wird der entstehende Brüden über Pfannendunstrohre der Brüdenverdichteranlage zugeführt und dort verdichtet. Bei der anschließenden Kondensation gibt er seine Wärme ab. Die dabei zurückgewonnene Energie kann dann im Sudhaus z.B. zum Vorheizen der in die Würzepfanne einlaufenden Würze wieder eingesetzt werden.

Bei bekannten Sudhausanlagen, sh. z.B DE-A-3023032, mit mindestens zwei Würzepfannen führt von jeder Würzepfanne ein Pfannendunstrohr zur Abluftseite, d.h., also ins Freie hin, wobei der Auslaß allerdings mit einer Klappe versperrt werden kann und durch Öffnen einer in einem vom Pfannendunstrohr abzweigenden Rohrzweig angeordneten Klappe der Brüden zur Brüdenverdichteranlage umgelenkt werden kann. Außerdem befindet sich in jedem Pfannendunstrohr jeder Würzepfanne als Unter-/ bzw. Überdruckabsicherung ein sogen. Wasserschloß.

Nachteilig an bekannten Anlagen dieser Art ist der relativ große Bauaufwand. Es müssen für jede Würzepfanne ein eigenes Wasserschloß und außerdem in jedem Pfannendunstrohr vor jeder Würzepfanne mindestens zwei Umschaltklappen angeordnet werden, was mit entsprechenden Kosten verbunden ist.

Aufgabe der Erfindung ist es daher, eine Sudhausanlage der gattungsgemäßen Art hinsichtlich des Bauaufwandes, insbesondere im Anschluß der Würzepfannen an den Brüdenverdichter, zu vereinfachen.

Gelöst wird diese Aufgabe dadurch, daß zwei jeweils von einer Würzepfanne wegführende Rohrabschnitte der Pfannendunstrohre an eine gemeinsame Umschaltvorrichtung angeschlossen sind, die je nach Schaltstellung eine der beiden Würzepfannen mit der Brüdenverdichteranlage verbindet.

Durch diese Maßnahme wird es möglich, die jeweils sich in Betrieb befindende Würzepfanne an die Brüdenverdichteranlage anzuschließen, wobei jeweils nur durch Umschalten der Umschaltvorrichtung der Wechsel auf die andere Würzepfanne vorgenommen werden kann. Es entfallen damit die Absperrklappen in den jeweiligen Rohrabschnitten der Pfannendunstrohre nach dem Stand der Technik. Außerdem ist es möglich, dann mit nur einem Wasserschloß für zwei Würzepfannen zu arbeiten, indem das Wasserschloß der Umschaltvorrichtung gemäß einem Ausführungsbeispiel der Erfindung parallel geschaltet wird.

Die Umschaltvorrichtung ist vorzugsweise als Klappenkasten mit zwei Einlaß- und zwei Auslaßanschlüssen ausgebildet. An zwei gegenüberliegenden Einlaßanschlüssen können dann die beiden Würzepfannen angeschlossen sein, während an den anderen Auslaßanschlüssen einmal das Verbindungsrohr zum Brüdenverdichter und zum anderen das Abzugsrohr angeschlossen sein kann.

Bei einer Sudanlage mit vier Würzepfannen werden bevorzugt jeweils zwei Würzepfannen an eine gemeinsame Umschaltvorrichtung angeschlossen und es werden die beiden Brüdenverdichterauslaßanschlüsse jeder Umschaltvorrichtung an die Einlaßanschlüsse einer dritten Umschaltvorrichtung angeschlossen. Bei dieser Ausführungsform kann allen drei Umschaltvorrichtungen ein einziges Wasserschloß parallel geschaltet sein, so daß man zum Anschluß von vier Würzepfannen lediglich drei Umschaltvorrichtungen, bevorzugt in der Form von Klappenkästen, und ein Wasserschloß benötigt.

Die Erfindung wird im folgenden anhand zweier Ausführungsbeispiele weiter erläutert und beschrieben.

Dabei zeigt
- Figur 1: ein stark vereinfachtes Schema einer Sudhausanlage, in der die Erfindung verwirklicht ist und
- Figur 2: die Verschaltung dreier Klappenkästen zum Anschluß von vier Würzepfannen an einen Brüdenverdichter.

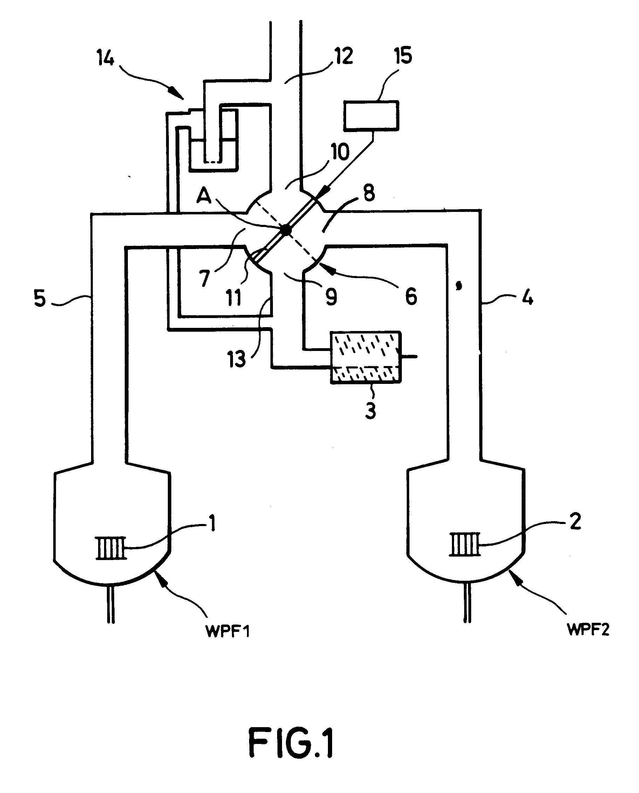

In der Figur 1 ist stark vereinfacht eine Würzepfanne WPF1 und eine Würzepfanne WPF2 dargestellt. Die beiden Würzepfannen sind Bestandteil einer ansonsten in bekannter Weise aufgebauten Sudhausanlage. Sie besitzen Innenkocher 1, 2, mit dem bei der Bierherstellung die Würze in den Würzepfannen erhitzt werden kann.

Nach oben heraus aus den Würzepfannen führen die Rohrabschnitte 4 und 5, die an die Einlaßanschlüsse 8 bzw. 7 der in der Form einen Klappenkastens ausgebildeten Umschaltvorrichtung 6 angeschlossen sind. Der Klappenkasten 6 weist eine um die Schwenkachse A drehbare Schwenkklappe 11 auf, die elektrisch über einen Schaltkasten 15 drehbar ist und von der durchgezogen dargestellten Position in die gestrichelt dargestellte Position bewegt werden kann. In beiden Positionen dichtet die Schwenkklappe 11 gegen die Gehäusewandabschnitte des Klappenkastens 6 ab. Die beiden Einlaßanschlüsse 7 und 8 liegen sich am Klappenkasten gegenüber, während 90^{o} versetzt dazu sich die beiden Auslaßanschlüsse 9 und 10 gegenüberliegen. Der Auslaß 10 führt in ein Abzugsrohr 12, das ins Freie mündet, während der Auslaßanschluß 9 über das Verbindungsrohr 13 an die Brüdenverdichteranlage 3 angeschlossen ist.

Zwischen die Abzugsleitung 12 und das Verbindungsrohr 13 ist das Wasserschloß 14 parallel geschaltet, das als Überdruck-/ bzw. Unterdrucksicherung in bekannter Weise dient.

Der Anschluß an das Verbindungsrohr 13 geschieht ebenfalls in bekannter Weise über die Leitung 15.

Mit dieser Anlage kann prinzipiell wie folgt gearbeitet werden:
Wenn die Schwenkklappe 11 des Klappenkastens 6 die durchgezogen dargestellte Position einnimmt, wird der beim Kochen in der Würzepfanne WPF2 entstehende Brüden über den Rohrabschnitt 4 durch die Schwenkklappe 11 in das Verbindungsrohr 13 eingeleitet und damit zum Brüdenverdichter 3 geführt. Die Würzepfanne WPF1 dagegen ist mit dem Abzug 12 verbunden. Ist der Kochvorgang in der Würzepfanne WPF2 zu Ende und soll mit der Würzepfanne WPF1 nun gekocht werden, so wird über die elektrische Steuerung 15 die Schaltklappe in die gestrichelt dargestellte Position verschwenkt, so daß dann die Würzepfanne WPF1 mit dem Brüdenverdichter 3 und die Würzepfanne WPF2 mit dem Abzug verbunden ist. In einfachster Weise lassen sich somit die beiden Würzepfannen ohne großen Vorrichtungs- und Schaltungsaufwand wahlweise an den Brüdenverdichter anschließen.

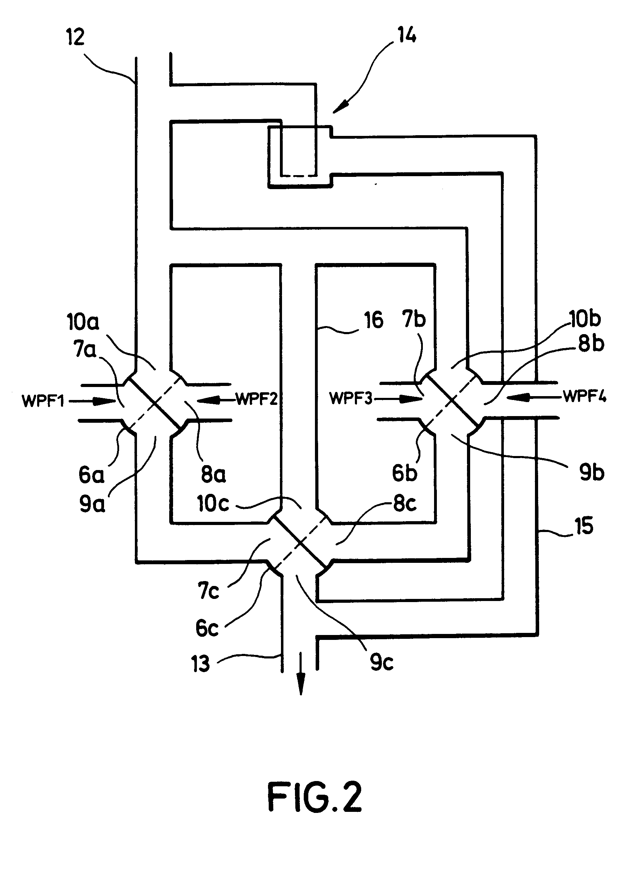

Bei der in der Figur 2 dargestellten Ausführungsform weist die Sudhausanlage vier Würzepfannen WPF1 bis WPF4 auf. Die Würzepfanne WPF1 und WPF2 ist an die Einlaßanschlüsse 7a und 8a des Klappenkastens 6a angeschlossen. Die Würzepfannen 3 und 4 sind dagegen an die Einlaßanschlüsse 7b und 8b des zweiten Klappenkastens 6b angeschlossen. Die Brüdenauslässe 9a und 9b der beiden Klappenkäsen 6a und 6b sind an die Einlaßanschlüsse 7c und 8c des dritten Klappenkastens 6c angeschlossen. Parallel zu diesen drei Klappenkästen ist wiederum das Wasserschloß 14 geschaltet, in dem es zwischen die allen drei Klappenkästen gemeinsame Abzugsleitung 12 und das zum Brüdenverdichter führende Verbindungsrohr 13 geschaltet ist. Damit sind alle drei Klappenkästen mit einem Wasserschloß Überdruck- und -unterdruckgesichert.

In der in Figur 2 gezeigten Position ist die Würzepfanne WPF1 in Betrieb, d.h., der Brüden der Würzepfanne WPF1 wird über den Klappenkasten 6a und den Klappenkasten 6c und das Verbindungsrohr 13 zum Brüdenverdichter weitergeleitet, während die drei anderen Würzepfannen an den Abzug 12 angeschlossen sind.

Soll nun die Würzepfanne WPF2 in Betrieb genommen werden, wird die Schwenkklappe des Klappenkastens 6a in die gestrichelt gezeichnete Position geschwenkt, während die Stellung der beiden anderen Schwenkklappen beibehalten wird.

Entsprechend wird beim Betrieb der Würzepfannen WPF3 bzw. WPF4 die Schwenkklappe des Klappenkastens 6c in die in Figur 2 gestrichelt dargestellte Position verschwenkt und dann wahlweise durch Schwenken der Schwenkklappe des Klappenkastens 6b entweder die Würzepfanne WPF3 oder die Würzepfanne WPF4 betrieben.

Im übrigen wird darauf hingewiesen, daß unter Würzepfannen gleichermaßen auch im Sinne der Erfindung auch Whirlpool-Pfannen zu verstehen sind. Dabei spielt es keine Rolle, ob die Würze- oder Whirlpool-Pfannen mit Innen- oder Außenkocher ausgestattet sind. Die Erfindung ist vielmehr gleichermaßen für Würze- und Whirlpool-Pfannen mit Innen- und Außenkocher anwendbar. Wenn außerdem im Anmeldungstext von einem Wasserschloß als Über-/ oder Unterdrucksicherung gesprochen wird, so ist dies nur als Beispiel anzusehen. Die Erfindung ist gleichermaßen auch dann sinnvoll, wenn die Über-/ und Unterdrucksicherung anders, insbesondere durch herkömmliche elektrische, mechanische oder elektromagnetische Absicherungen verwirklicht werden kann.

## Patentansprüche

1. Sudhausanlage mit mindestens zwei Würzepfannen, die über Pfannendunstrohre an eine Brüdenverdichteranlage angeschlossen sind,
**dadurch gekennzeichnet**, dass
zwei Rohrabschnitte (4, 5), die von je einer Würzepfanne (WPF2, WPF1) wegführen, an eine gemeinsame Umschaltvorrichtung (6) angeschlossen sind, die je nach Schaltstellung eine der beiden Würzepfannen mit der Brüdenverdichteranlage (3) verbindet oder mit einem Rohrabschnitt (16) verbindet, der seinerseits wiederum an eine Umschaltvorrichtung (6c) angeschlossen ist.

2. Sudhausanlage nach Anspruch 1, **dadurch gekennzeichnet**, daß die Umschaltvorrichtung als Klappenkasten mit zwei Einlaßanschlüssen (7, 7a, 7b, 7c; 8, 8a, 8b, 8c) und zwei Auslaßanschlüssen (9, 9a, 9b, 9c; 10, 10a, 10b, 10c) ausgebildet ist.

3. Sudhausanlage nach Anspruch 2, **dadurch gekennzeichnet**, daß in dem Klappenkasten eine um eine Achse drehbare Schaltklappe (11) als Zweiwegeklappe angeordnet ist.

4. Sudhausanlage nach Anspruch 2 oder 3, **dadurch gekennzeichnet**, daß an den beiden Einlässen (7, 8) die beiden Würzepfannen (1, 2) und an den Auslaßanschlüssen (9, 10) der Abzug (12) bzw. das Verbindungsrohr (13) zum Brüdenverdichter (3) angeschlossen ist.

5. Sudhausanlage nach Anspruch 1, **dadurch gekennzeichnet**, daß parallel zur Umschaltvorrichtung ein Wasserschloß angeordnet ist.

6. Sudhausanlage nach einem der vorangegangenen Ansprüche, **dadurch gekennzeichnet**, daß bei einer Anlage mit vier Würzepfannen (WPF1 bis WPF4) jeweils zwei Würzepfannen (WPF1, WPF2; und WPF3, WPF4) an eine gemeinsame Umschaltvorrichtung (6a, 6b) angeschlossen sind, und daß die beiden Brüdenverdichterauslaßanschlüsse (9a, 9b) jeder Umschaltvorrichtung (6a, 6b) an die Einlaßanschlüsse (7c, 8c) einer dritten Umschaltvorrichtung (6c) angeschlossen sind.

7. Sudhausanlage nach Anspruch 6, **dadurch gekennzeichnet**, daß parallel zu den drei Umschaltvorrichtungen (6a, 6b, 6c) ein Wasserschloß (14) angeordnet ist.

## Claims

1. Brewing unit with at least two wort vessels which are connected to a vapour condensation system via vessel fume pipes, characterized in that two pipe sections (4, 5), which in each case lead away from a wort vessel (WPF2, WPF1), are connected to a common change-over device (6) which, depending on the switching position, connects one of the two wort vessels to the vapour condensation system (3) or to a pipe section (16) which is itself in turn connected to a change-over device (6c).

2. Brewing unit according to Claim 1, characterized in that the change-over device is designed as a flap box with two inlet connections (7, 7a, 7b, 7c; 8, 8a, 8b, 8c) and two outlet connections (9, 9a, 9b, 9c; 10, 10a, 10b, 10c).

3. Brewing unit according to Claim 2, characterized in that a switching flap (11) rotable about an axis is arranged as a two-way flap in the flap box.

4. Brewing unit according to Claim 2 or 3, characterized in that the two wort vessels (1, 2) are connected to the two inlets (7, 8) and the flue (12) or the connecting pipe (13) to the vapour condenser (3) is connected to the outlet connections (9, 10).

5. Brewing unit according to Claim 1, characterized in that a water lock is arranged parallel to the change-over device.

6. Brewing unit according to one of the preceding claims, characterized in that, in a unit with four wort vessels (WPF1 to WPF4), in each case two wort vessels (WPF1, WPF2; and WPF3, WPF4) are connected to a common change-over device (6a, 6b), and in that the two vapour condenser outlet connections (9a, 9b) of each change-over device (6a, 6b) are connected to the inlet connections (7c, 8c) of a third change-over device (6c).

7. Brewing unit according to Claim 6, characterized in that a water lock (14) is arranged parallel to the three change-over devices (6a, 6b, 6c).

## Revendications

1. Unité de brassage comprenant au moins deux cuves d'ébullition, qui sont raccordées par l'intermédiaire de conduits d'évacuation à une unité de compression des buées, **caractérisée en ce que** deux sections de conduits (4, 5), qui partent respectivement d'une cuve d'ébullition (WPF2, WPF1), sont raccordées à un dispositif d'inversion commun (6)qui relie, suivant la position de commutation, l'une des deux cuves d'ébullition à l'unité de compression des buées (3) ou à une section de conduit (16), qui est pour sa part de nouveau raccordée à un dispositif d'inversion (6c).

2. Unité de brassage suivant la revendication 1, caractérisée en ce que le dispositif d'inversion est réalisé sous forme de caisson à volet avec deux raccords d'admission (7, 7a, 7b, 7c ; 8, 8a, 8b, 8c) et deux raccords d'échappement (9, 9a, 9b, 9c ; 10, 10a, 10b, 10c).

3. Unité de brassage suivant la revendication 2, caractérisée en ce qu'un volet de commutation (11), pouvant tourner autour d'un axe, est disposé comme volet à deux voies dans le caisson à volet.

4. Unité de brassage suivant l'une des revendications 2 et 3, caractérisée en ce que les deux cuves d'ébullition (1, 2) sont raccordées aux deux admissions (7, 8), l'échappement (12) et/ou le conduit de jonction (13) au compresseur de buées (3) étant raccordés aux raccords d'échappement (9, 10).

5. Unité de brassage suivant la revendication 1, caractérisée en ce qu'une cheminée d'équilibre est montée en parallèle du dispositif d'inversion.

6. Unité de brassage suivant l'une des revendications précédentes, caractérisée en ce que, sur une unité comprenant quatre cuves d'ébullition (WPF1 à WPF4), deux cuves (WPF1, WPF2 ; et WPF3, WPF4) sont respectivement raccordées à un dispositif d'inversion commun (6a, 6b), et en ce que les deux raccords d'échappement au compresseur de buées (9a, 9b) de chaque dispositif d'inversion (6a, 6b) sont raccordés aux raccords d'admission (7c, 8c) d'un troisième dispositif d'inversion (6c).

7. Unité de brassage suivant la revendication 6, caractérisée en ce qu'une cheminée d'équilibre (14) est montée en parallèle des trois dispositifs d'inversion (6a, 6b, 6c).
